(19) Europäisches Patentamt
European Patent Office
Office européen des brevets

(11) **EP 3 928 281 B1**

## (12) FASCICULE DE BREVET EUROPEEN

(45) Date de publication et mention
de la délivrance du brevet:
**06.05.2026 Bulletin 2026/19**

(21) Numéro de dépôt: **20705317.4**

(22) Date de dépôt: **10.02.2020**

(51) Classification Internationale des Brevets (IPC):
**G06T 7/33** *(2017.01)* **G06T 3/147** *(2024.01)*

(52) Classification Coopérative des Brevets (CPC):
**G06T 3/147; G06T 7/33;** G06T 2207/10028

(86) Numéro de dépôt international:
**PCT/EP2020/053275**

(87) Numéro de publication internationale:
**WO 2020/169381 (27.08.2020 Gazette 2020/35)**

(54) **PROCEDE DE RECALAGE D'IMAGES DE PROFONDEUR**

VERFAHREN ZUR REGISTRIERUNG VON TIEFENBILDERN

METHOD FOR REGISTERING DEPTH IMAGES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **22.02.2019 FR 1901827**

(43) Date de publication de la demande:
**29.12.2021 Bulletin 2021/52**

(73) Titulaire: **Fogale Nanotech
30900 Nîmes (FR)**

(72) Inventeurs:
• **KAISER, Adrien**
**75013 PARIS (FR)**
• **YBANEZ ZEPEDA, José Alonso**
**75005 PARIS (FR)**
• **BOUBEKEUR, Tamy**
**75013 PARIS (FR)**
• **COURTEVILLE, Alain**
**30111 CONGENIES (FR)**

(74) Mandataire: **IPAZ
Parc Les Algorithmes
Bâtiment Platon
91190 Saint Aubin (FR)**

(56) Documents cités:
• **DATABASE COMPENDEX [online]
ENGINEERING INFORMATION, INC., NEW YORK,
NY, US; 15 December 2015 (2015-12-15), SAVAL-
CALVO M ET AL: "-MAR: Multiplane 3D Marker
based Registration for depth-sensing cameras",
XP093335864, Database accession no.
E20153701273506**
• **SAVAL-CALVO M ET AL: "-MAR: Multiplane 3D
Marker based Registration for depth-sensing
cameras", EXPERT SYSTEMS WITH
APPLICATIONS 20151215 ELSEVIER LTD GBR,
vol. 42, no. 23, 15 December 2015 (2015-12-15),
pages 9353 - 9365, XP029278337, DOI: 10.1016/
J.ESWA.2015.08.011**
• **ZITOVA B ET AL: "IMAGE REGISTRATION
METHODS: A SURVEY", IMAGE AND VISION
COMPUTING, ELSEVIER, GUILDFORD, GB, vol.
21, no. 11, 1 October 2003 (2003-10-01), pages
977 - 1000, XP001189327, ISSN: 0262-8856, DOI:
10.1016/S0262-8856(03)00137-9**
• **LISA GOTTESFELD BROWN: "A survey of image
registration techniques", ACM COMPUTING
SURVEYS, ACM, NEW YORK, NY, US, US, vol. 24,
no. 4, 1 December 1992 (1992-12-01), pages 325 -
376, XP058191421, ISSN: 0360-0300, DOI:
10.1145/146370.146374**

EP 3 928 281 B1

- **MAINTZ J B A ET AL: "A SURVEY OF MEDICAL IMAGE REGISTRATION", MEDICAL IMAGE ANALYSIS, OXFORDUNIVERSITY PRESS, OXFORD, GB, vol. 2, no. 1, 1 January 1998 (1998-01-01), pages 1 - 37, XP001032679, ISSN: 1361-8423, DOI: 10.1016/S1361-8415(01)80026-8**
- **IVAN DRYANOVSKI ET AL: "Incremental registration of RGB-D images", ROBOTICS AND AUTOMATION (ICRA), 2012 IEEE INTERNATIONAL CONFERENCE ON, IEEE, 14 May 2012 (2012-05-14), pages 1685 - 1690, XP032450882, ISBN: 978-1-4673-1403-9, DOI: 10.1109/ICRA.2012.6225151**

**Description**

**Domaine technique**

La présente invention concerne un procédé de recalage d'images de profondeur. Elle concerne également l'utilisation d'un tel procédé dans un procédé de surveillance d'une zone d'intérêt dans une scène réelle, et dans un procédé de surveillance de l'environnement d'un robot.
Le domaine de l'invention est le domaine du traitement d'images de profondeur d'une même scène, en particulier du recalage d'images de profondeur d'une même scène.

**Etat de la technique**

On connait des applications qui nécessitent la détection dans une scène réelle d'un objet réel, ou d'un objet virtuel défini comme étant une zone dans ladite scène réelle et une condition associée à ladite zone, telle qu'une condition d'occupation de ladite zone par exemple. Pour ce faire, une phase de détection comprend la capture d'une image de profondeur de la scène par un capteur ou une caméra 3D, et une analyse des données représentant ladite image de profondeur en vue de détecter l'objet réel ou virtuel. Dans le cas de la surveillance d'une zone ou d'un environnement, cette phase de détection est réitérée à plusieurs reprises.
Or, il arrive que les images de profondeur ne soient pas toutes capturées suivant le même champ de vue, soit parce que la caméra 3D a été déplacée, soit parce que les images de profondeur sont obtenues par différentes caméras 3D ayant des champs de vue différents. Dans ce cas, il est nécessaire de recaler les images 3D entre elles car les objets de la scène réelle apparaissent alors à différentes positions.
Un procédé antérieur de recalage d'images de profondeur est connu à partir de:

Marcelo Saval-Calvo et al, "µ-MAR: Multiplane 3D Marker based Registration for depth-sensing cameras", Expert Systems with Applications, Volume 42, Issue 23, 2015, Pages 9353-9365, ISSN 0957-4174, https://doi.org/10.1016/j.eswa.2015.08.011.

Une analyse systématique et complète des images tridimensionnelles détectées aboutit à une masse de calculs élevée. Un allégement peut être réalisé en n'analysant qu'une partie des points de l'image détectée mais avec pour conséquence une réduction de la précision sur les données des images.
Un objet de la présente invention est de remédier à ces inconvénients.
Un autre objet de la présente invention est d'identifier correctement, sans équivoque, des objets 3D d'une scène dans des images de profondeur acquises selon des champs de vue différentes.
Un autre objet de la présente invention est de réaliser le suivi et l'analyse en temps réel de régions réelles ou virtuelles dans une scène d'objets 3D détectés par des capteurs ou des caméras 3D multiples et/ou en mouvement relatif par rapport aux objets de la scène.
Un autre objet de la présente invention est de localiser des champs de vue de capteurs ou caméras 3D dans une scène.
Un autre but de la présente invention est de proposer un procédé de recalage d'images de profondeur d'une scène réelle avec moins de ressources de calcul et moins de temps de calcul que les techniques actuelles, pour une précision donnée.

**Exposé de l'invention**

Au moins un de ces buts est atteint avec un procédé de recalage de deux images de profondeur d'une scène réelle, ledit procédé comprenant les étapes suivantes :

- pour chacune desdites images de profondeur :

    - détection d'une pluralité de formes géométriques dans ladite image de profondeur, et
    - détermination d'au moins une relation géométrique entre au moins deux formes géométriques de ladite pluralité de formes géométriques ;

- identification de formes géométriques communes auxdites deux images par comparaison des relations géométriques détectées pour l'une des images à celles détectées pour l'autre desdites images ;
- calcul, en fonction desdites formes géométriques communes, d'une transformation géométrique entre lesdites images ; et

- recalage de l'une desdites images, par rapport à l'autre desdites images, en fonction de ladite transformation géométrique.

Ainsi, le procédé selon l'invention propose de recaler entre elles, ou localiser entre elles, deux images de profondeur d'une même scène réelle, en utilisant non pas les objets se trouvant dans la scène, mais des relations géométriques entre des formes géométriques identifiées dans chaque image de profondeur.

L'identification, dans chaque image, des formes géométriques et des relations géométriques entre ces formes, nécessite moins de ressources de calcul et moins de temps de calcul, que l'identification des objets réels de la scène dans chaque image.

De plus, la comparaison entre elles des relations géométriques est plus simple et plus rapide, que de comparer les objets réels de la scène entre eux. En effet, les formes géométriques et leurs relations sont représentées par une quantité de données à traiter beaucoup plus faible que la quantité de données représentant les objets réels de la scène.

Dans la présente demande, par « recalage » de deux images on entend la détermination du positionnement relatif des deux images, ou le positionnement desdites images dans un référentiel commun. Le référentiel commun peut être le référentiel de l'une des deux images, ou un référentiel de la scène.

Un « objet » dans la scène peut être tout objet définissant les limites de la scène telles que le sol, un plafond, un mur, une fenêtre, une porte, ou tout élément présent dans la scène tel qu'une table, une chaise, un tableau, etc.

La scène peut être une scène d'intérieur dans une pièce ou un bâtiment, ou une usine, ... ou une scène extérieure telle qu'un jardin, une place, etc.

Une image de profondeur peut être une image obtenue par exemple sous la forme d'un nuage de points ou d'une matrice de pixels, avec pour chaque pixel une information de distance ou de profondeur. Bien entendu, les données des points peuvent également comprendre d'autres informations, telles que des informations d'intensité lumineuse, en niveaux de gris et/ou en couleur.

De manière générale, chaque image est représentée par des données numériques, par exemple des données pour chaque point appartenant au nuage de points. Le traitement de chaque image est réalisé par traitement des données représentant ladite image.

Par « caméra 3D » on entend tout capteur pouvant produire une image de profondeur. Un tel capteur peut être par exemple une caméra à temps de vol, et/ou stéréoscopique, et/ou basée sur une projection de lumière structurée, qui produit une image de son environnement selon un champ de vue sur une pluralité de points ou pixels, avec une information de distance par pixel.

Une caméra 3D peut également comprendre un ou une pluralité de capteurs de distance ponctuels, par exemple optiques ou acoustiques, fixes ou équipés d'un dispositif de balayage, agencés de sorte à acquérir un nuage de points selon un champ de vue.

Un champ de vue peut être défini comme une zone, un secteur angulaire ou une partie d'une scène réelle imagée par une caméra 3D.

La transformation géométrique peut être notamment une transformation linéaire ou rigide. Elle peut notamment être déterminée sous la forme d'une matrice de déplacement, représentative par exemple d'une translation et/ou d'une rotation.

Les formes géométriques au sens de la présente demande peuvent être des éléments géométriques pouvant être décrits ou modélisés par des équations ou des systèmes d'équations, tels que par exemple : des plans, des lignes, des cylindres, des cubes, ...
Suivant des modes de mise en œuvre, le procédé de l'invention comprend une détection de formes géométriques toutes de même nature (par exemple uniquement des plans).

Suivant d'autres modes de mise en œuvre, le procédé de l'invention comprend une détection de formes géométriques de nature différente parmi un ensemble fini (par exemple des plans et des cubes).

Avantageusement, les relations géométriques utilisées peuvent être invariantes par la transformation géométrique recherchée.

Ainsi, par exemple, des angles et des distances sont invariantes par les transformations géométriques de type rotation et translation.

Pour chaque image, l'étape de détection peut comprendre une détection d'au moins un groupe de formes géométriques présentant toutes une orientation similaire, ou une même orientation relativement à une direction de référence prédéterminée dans la scène.

Des formes géométriques peuvent être considérée comme présentant une orientation similaire, ou une même orientation relativement à une direction de référence, lorsqu'elles sont toutes orientées selon un angle particulier relativement à cette direction de référence, dans une gamme de tolérances angulaires prédéterminé, par exemple de +/-5 degrés, ou +/- 10 degrés. Cet angle particulier peut être par exemple 0 degré (orientation parallèle), ou 90 degrés (orientation perpendiculaire). Il est bien entendu que les formes géométriques d'un groupe peuvent par ailleurs présenter une orientation non parallèle entres elles.

La détection d'un groupe de formes géométriques peut comprendre une identification, ou une classification dans ce groupe, de formes géométriques dans un ensemble de formes géométriques préalablement détectées dans l'image de profondeur, ou une détection de ces formes géométriques particulières dans l'image de profondeur.

Dans le cas où une forme est une ligne, l'orientation de la forme peut correspondre à l'orientation de ladite ligne par rapport à la direction de référence. Dans le cas où une forme est un plan à deux dimensions, l'orientation de la forme peut correspondre à l'orientation dudit plan, ou de son vecteur normal, par rapport à la direction de référence. Enfin, lorsqu'une forme est une forme tridimensionnelle (telle qu'un cylindre ou un cube), son orientation peut être donnée par sa direction principale, ou d'extension, ou un axe de symétrie.

Les formes géométriques et leur orientation peuvent être déterminées par les techniques connues.

De manière générale, le nuage de points est segmenté ou regroupé sous formes de zones ou d'ensembles correspondant à, ou pouvant être modélisées ou approximées par, une ou des formes géométriques de nature prédéterminée. Puis les paramètres descriptifs de ces formes géométriques sont calculés par des méthodes de minimisation d'erreurs tels que les moindres carrées, en optimisant par exemple des paramètres d'une équation géométrique pour minimiser des écarts par rapport au nuage de points. L'orientation des formes géométriques peut alors se déduire par exemple des paramètres des équations qui les décrivent.

Préférentiellement, pour chaque image, l'étape de détection peut comprendre une détection :

- d'un premier groupe de formes géométriques, présentant toutes une première orientation relativement à la direction de référence, en particulier une orientation parallèle à la direction de référence ; et
- d'au moins un deuxième groupe de formes géométriques présentant toutes une même deuxième orientation relativement à la direction de référence, différente de la première orientation, en particulier orthogonale à ladite première orientation.

Ainsi, le procédé selon l'invention permet d'obtenir deux groupes de formes d'orientation différentes relativement à la direction de référence, et en particulier perpendiculaires. Les relations géométriques sont déterminées entre les formes appartenant à un même groupe.

La relation géométrique recherchée entre les formes d'un groupe peut être identique, ou différente de la relation géométrique recherchée entre les formes d'un autre groupe. Par exemple, pour l'un des groupes, la relation géométrique recherchée entre les formes peut être une relation de distance, et pour l'autre des groupes la relation géométrique recherchée entre les formes peut être une relation angulaire.

Dans un mode de réalisation particulièrement préféré, la direction de référence peut être la direction du vecteur gravité dans la scène.

La direction du vecteur gravité peut correspondre à l'orientation de la force gravitationnelle.

Dans ce mode de réalisation, l'étape de détection peut comprendre une détection d'un groupe de formes géométriques présentant une orientation horizontale dans la scène, tel que par exemple de formes correspondant à des objets réels horizontaux dans la scène. De telles formes géométriques horizontales peuvent correspondre au sol, au plafond, à une table, etc.

Suivant une caractéristique avantageuse, mais nullement limitative, la relation géométrique entre deux formes géométriques horizontales peut comprendre, ou être, une distance entre lesdites deux formes, dans la direction du vecteur gravité.

Autrement dit, la distance recherchée entre deux formes horizontales est la distance séparant lesdites formes dans la direction verticale.

Toujours dans le mode de réalisation où la direction de référence est la direction du vecteur gravité dans la scène, l'étape de détection peut comprendre une détection d'un groupe de formes géométriques présentant une orientation verticale dans la scène.

De telles formes géométriques verticales peuvent correspondre à des objets verticaux dans la scène, tels que des murs, des portes, des fenêtres, des meubles, etc.

Suivant une caractéristique avantageuse mais nullement limitative, la relation géométrique entre deux formes géométriques verticales peut comprendre au moins un angle entre les deux formes géométriques.

En particulier, la relation géométrique entre deux formes verticales peut comprendre un angle entre lesdites formes dans le plan horizontal.

Suivant un mode de réalisation préféré, mais nullement limitatif, l'étape de détection peut réaliser une détection :

- d'un premier groupe de formes géométriques horizontales, et
- d'un deuxième groupe de formes géométriques verticales ;

par rapport au vecteur gravité.

Dans ce mode de réalisation, l'étape de détermination détermine :

- un ou des angles, mesurés dans le plan horizontal, entre les formes géométriques verticales ; et
- une ou des distances, mesurées dans la direction verticale, entre les formes géométriques horizontales.

La direction de référence peut être représentée par un vecteur de référence qui peut être tout vecteur préalablement déterminé et indiquant une direction et un sens dans la scène réelle.

La direction de référence peut, dans un cas particulier, être est la direction du vecteur gravité dans la scène, ou en d'autres termes le vecteur de référence peut être le vecteur gravité. Ce vecteur peut alors être utilisé, dans chaque image, pour déterminer si une forme de ladite image présente une orientation spécifique, par exemple une orientation verticale ou une orientation horizontale.

Suivant un mode de réalisation, le vecteur de référence, et en particulier le vecteur gravité, peut être détecté et renseigné par un capteur pour chaque image. Un tel capteur peut par exemple être un accéléromètre.

Suivant un autre mode de réalisation, le vecteur de référence, et en particulier le vecteur de gravité, peut être déterminé, dans chaque image, par analyse de ladite image.

Par exemple, dans le cas où le vecteur de référence est le vecteur de gravité, alors chaque image peut être analysée pour détecter un plan correspondant au sol ou au plafond, dans le cas d'une scène d'intérieur : le vecteur gravité correspond alors au vecteur perpendiculaire à ce plan. En général, le sol ou le plafond sont les plus grands plans dans une image de profondeur.

Suivant un autre exemple de réalisation, lorsque l'image de profondeur comprend une composante couleur, alors la composante couleur peut être utilisée pour détecter un plan prédéterminé, et utiliser ce plan pour obtenir le vecteur de référence, et en particulier le vecteur gravité.

Avantageusement, l'étape de détermination de relations géométriques peut comprendre, pour chaque forme géométrique, une détermination d'une relation géométrique entre ladite forme géométrique et chacune des autres formes géométriques, de sorte qu'une relation géométrique est déterminée pour chaque combinaison par paires des formes géométriques.

Lorsque l'étape de détection comprend une détection d'un ou plusieurs groupes de formes géométriques, l'étape de détermination de relations géométriques peut comprendre, pour chaque forme géométrique d'un groupe, une détermination d'une relation géométrique entre ladite forme géométrique et chacune des autres formes géométriques dudit groupe, de sorte qu'une relation géométrique est déterminée pour chaque combinaison par paires des formes géométriques dudit groupe.

Ainsi, pour un groupe comprenant « n » formes géométriques, on obtient $\sum_{1}^{n-1} k$ de paires de formes géométriques, et donc autant de relations géométriques.

Au moins une forme géométrique peut être une ligne, un plan ou une forme géométrique tridimensionnelle.

En particulier, le cas échéant, toutes les formes géométriques d'un même groupe, et plus généralement de tous les groupes, peuvent être de même nature.

Dans une forme de réalisation particulièrement préférée, toutes les formes géométriques peuvent être des plans.

Dans ce cas, dans chaque image, l'étape de détection peut réaliser une approximation, par des plans, de surfaces de la scène réelle apparaissant dans ladite image. Ainsi, un objet comportant plusieurs faces est approximé par plusieurs plans, sans avoir à détecter l'objet dans son ensemble.

De plus les relations géométriques sont plus simples à déterminer entre des plans.

Dans chaque image, la détection des plans peut être réalisée de manière simple par des algorithmes connus, tels que par exemple l'algorithme RANSAC.

Suivant un exemple de réalisation, la détection de plans dans une image de profondeur peut être réalisée par les étapes suivantes :

- pour chaque point de l'image de profondeur, ou l'image en nuage de points, on calcule des normales (N) de chaque point du nuage à l'aide, par exemple, du gradient de profondeur. Celui-ci est obtenu, en pratique, pour chaque point, en soustrayant la profondeur du point inférieur à celle du point supérieur (gradient vertical) et la profondeur du point de gauche à celle du point de droite (gradient horizontal). La normale au point est alors donnée par le produit vectoriel du vecteur gradient vertical avec le vecteur gradient horizontal.
- au moins une itération d'une étape de calcul de plans dans le nuage de points en utilisant les normales des points dans le nuage de points. Cette étape comprend les opérations suivantes :

  - tirer aléatoirement 3 points parmi le nuage de points,
  - calculer les paramètres d'un plan passant par ces 3 points, puis
  - calculer le nombre de points de P appartenant à ce plan selon des critères tels que des distances inférieures à un seuil ou des normales proches.

Un plan peut être considéré comme identifié si un nombre minimum de points a été identifié comme lui appartenant. Les points appartenant à un plan sont retirés de l'ensemble P pour ne pas être utilisés pour l'identification des plans suivants. L'étape de calcul de plans ci-dessus peut être réitérée autant de fois que souhaité.

Les paramètres descriptifs du plan peuvent ensuite être déterminés à partir des points identifiés comme appartenant à ce plan, en calculant par exemple les paramètres d'une équation de ce plan au sens des moindres carrés.

L'étape de détection de plans fournit ainsi une liste des plans identifiés avec leurs paramètres descriptifs et l'ensemble des points leur appartenant.

L'ensemble des plans peut être traité au sein d'un unique groupe.

Alternativement, parmi tous les plans détectés, les plans verticaux peuvent être regroupés dans un premier groupe et les plans horizontaux peuvent être regroupés au sein d'un deuxième groupe. Les relations géométriques peuvent alors être déterminées entre les plans d'un même groupe, comme décrit plus haut.

Suivant un mode de réalisation, le calcul de la transformation géométrique peut comprendre un calcul d'une matrice de transformation construite à partir :

- d'une différence, au moins dans une direction donnée, entre la position d'au moins une forme géométrique dans l'une desdites images et la position de ladite au moins une forme géométrique dans l'autre desdites images ; et
- d'une différence d'orientation entre au moins un repère orthonormé associé à au moins une forme géométrique dans l'une desdites images et ledit au moins un repère orthonormé associé à ladite au moins une forme géométrique dans l'autre desdites images.

Suivant un mode de réalisation dans lequel toutes les formes géométriques sont des plans, en particulier un groupe de plan horizontaux et un groupe de plans verticaux, le calcul de la transformation géométrique peut comprendre un calcul d'une matrice de transformation construite à partir :

- d'une distance, dans la direction verticale, entre la position d'un plan horizontal dans l'une desdites images et la position dudit plan dans l'autre desdites images ;
- de deux distances, dans des directions horizontales, entre les positions respectives de deux plans verticaux non parallèles ou orthogonaux entre eux dans l'une desdites images et les positions respectives desdits plans dans l'autre desdites images ; et
- d'une différence d'orientation entre un repère orthonormé associé à un plan vertical dans l'une desdites images, et un repère orthonormé associé audit plan vertical dans l'autre desdites images.

Les distances dans les directions horizontales peuvent également être déterminées à partir des positions respectives, dans les deux images, des droites d'intersection de deux plans verticaux non parallèles ou orthogonaux entre eux.

La matrice de transformation ainsi obtenue est complète et permet de recaler complètement deux images de profondeur entre elles.

Suivant encore un autre aspect de la présente invention, il est proposé un programme informatique pour le recalage de deux images de profondeur d'une scène réelle, lorsqu'il est exécuté sur un appareil informatique, comprenant les instructions informatiques pour mettre en œuvre les étapes du procédé de recalage de deux images d'une scène réelle selon l'invention.

Un tel programme informatique peut être rédigé dans tout langage informatique tel que du JAVA, C++, etc.

Suivant encore un autre aspect de la présente invention, il est proposé un dispositif de recalage de deux images de profondeur configuré pour mettre en œuvre les étapes du procédé de recalage de deux images de profondeur selon l'invention.

Un tel dispositif peut être tout appareil, ou composant, électronique ou informatique comprenant des instructions informatiques pour mettre en œuvre les étapes du procédé de recalage de deux images de profondeur d'une scène réelle, selon l'invention.

Par exemple, un tel dispositif peut être un ordinateur, un calculateur, un processeur, etc.

Suivant un autre aspect de la présente invention, il est proposé un procédé de surveillance d'une zone d'intérêt dans une scène réelle, définie dans une première image de profondeur de ladite scène préalablement acquise suivant un premier champ de vue, ledit procédé comprenant au moins une itération des étapes suivantes :

- acquisition d'une deuxième image suivant un deuxième champ de vue, ledit deuxième champ de vue étant en particulier différent dudit premier champ de vue ;
- recalage desdites première et deuxième images de profondeur par le procédé de recalage selon l'invention ;
- identification de la zone d'intérêt dans ladite deuxième image de profondeur ; et
- détection d'un changement, ou non, dans ladite zone d'intérêt.

Par changement on entend toute modification dans la zone d'intérêt, telle que l'apparition d'un objet dans ladite zone, la disparition d'un objet préalablement présent dans la zone, une modification d'un objet présent dans la zone telle qu'un déplacement de l'objet au sein de la zone, etc.

Ainsi, le procédé selon l'invention permet de surveiller une zone d'intérêt.

Le résultat de l'étape de détection peut être utilisé pour déclencher une fonction préalablement définie.

La fonction préalablement définie peut être fonction du changement détecté. Ainsi, un déplacement d'un objet dans la zone d'intérêt peut déclencher une première fonction, et une apparition d'un nouvel objet dans la zone peut déclencher une deuxième fonction, etc.

Suivant encore un autre aspect de la présente invention, il est proposé un programme informatique pour la surveillance d'une zone d'intérêt dans une scène réelle, lorsqu'il est exécuté sur un appareil informatique, comprenant les instructions informatiques pour mettre en œuvre les étapes du procédé de surveillance d'une zone d'intérêt dans une scène réelle selon l'invention.

Un tel programme informatique peut être rédigé dans tout langage informatique tel que du JAVA, C++, etc.

Suivant encore un autre aspect de la présente invention, il est proposé un dispositif de surveillance d'une zone d'intérêt dans une scène réelle comprenant :

- au moins une caméra 3D, et
- au moins un moyen de calcul ;

configurés pour mettre en œuvre toutes les étapes du procédé de surveillance d'une zone d'intérêt selon l'invention.

Suivant un autre aspect de la présente invention, il est proposé un procédé de surveillance de l'environnement d'un robot comprenant :

- une phase d'obtention d'une image de profondeur de l'environnement dudit robot, dite image de référence, par au moins une caméra 3D portée par ledit robot ; et
- au moins une itération d'une phase de détection comprenant les étapes suivantes :

  - acquisition, à un instant de mesure, d'une image de profondeur dudit environnement, dite image de mesure, par ladite au moins une caméra 3D,
  - recalage desdites images de référence et de mesure, par le procédé de recalage selon l'invention ; et
  - détection d'un changement relatif à un objet dans l'environnement dudit robot par comparaison desdites images de référence et de mesure.

La détection d'un changement relatif à au moins un objet environnant permet par exemple de déclencher des actions spécifiques du robot, tel qu'un arrêt ou un ralentissement en cas d'approche d'un opérateur ou d'un objet.

Suivant un autre aspect, il est proposé un dispositif de surveillance de l'environnement d'un robot comprenant :

- au moins un capteur 3D, et
- au moins un moyen de calcul ;

configurés pour mettre en œuvre toutes les étapes du procédé de surveillance de l'environnement d'un robot selon l'invention.

Suivant encore un autre aspect de la présente invention, il est proposé un robot équipé d'un dispositif de surveillance de l'environnement d'un robot, selon l'invention.

Le robot selon l'invention peut être un robot, sous toutes ses formes, tel qu'un système robotisé, un robot mobile, un véhicule sur roues ou chenilles tel qu'un chariot muni d'un bras ou d'un système manipulateur, ou un robot de type humanoïde, gynoïde ou androïde, éventuellement pourvu d'organes de déplacement tels que des membres, ou un bras robotisé, etc. En particulier, un robot peut être mobile lorsqu'il est en mesure de se déplacer ou qu'il comprend des parties en mouvement.

En particulier, le robot selon l'invention peut comprendre :

- au moins un segment mobile, et
- plusieurs caméras 3D distribuées autour dudit segment mobile.

## Description des figures et modes de réalisation

D'autres avantages et caractéristiques apparaîtront à l'examen de la description détaillée d'exemples nullement limitatifs, et des dessins annexés sur lesquels :

- la FIGURE 1 est une représentation schématique d'un exemple de réalisation non limitatif d'un procédé de recalage d'images de profondeur selon l'invention ;
- la FIGURE 2 est une représentation schématique d'un exemple d'application non limitatif d'un procédé de recalage de deux images de profondeur, selon l'invention ;
- la FIGURE 3 est une représentation schématique d'un exemple de réalisation non limitatif d'un procédé de surveillance d'une zone d'intérêt dans une scène réelle, selon l'invention ;
- la FIGURE 4 est une représentation schématique d'un exemple de réalisation non limitatif d'un dispositif de surveillance d'une zone d'intérêt dans une scène réelle, selon l'invention.
- les FIGURES 5a et 5b sont des représentations schématiques d'un exemple de réalisation non limitatif d'un robot selon l'invention ; et
- la FIGURE 6 est une représentation schématique d'un exemple de réalisation non limitatif d'un procédé de surveillance de l'environnement d'un robot.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

Dans les exemples qui suivent, toutes les formes géométriques considérées sont des plans. Bien entendu, l'invention n'est pas limitée à des plans et peut utiliser d'autres formes géométriques telles que des lignes ou des formes géométriques tridimensionnelles en forme de parallélépipède, de sphère, de cylindre, etc.

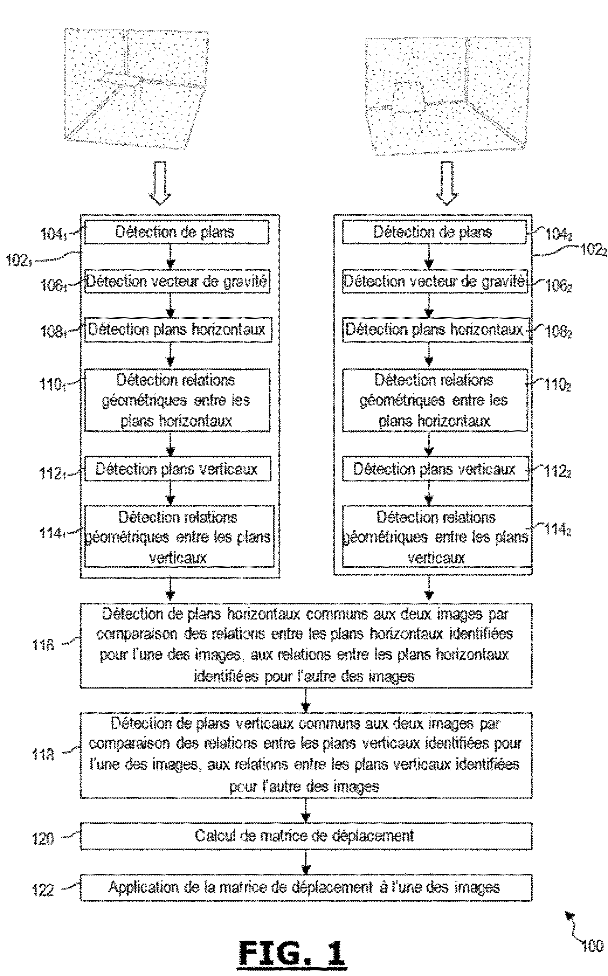

La FIGURE 1 est une représentation schématique d'un exemple de réalisation non limitatif d'un procédé de recalage d'images de profondeur selon l'invention, en utilisant comme formes géométriques des plans.

Le procédé 100, représenté sur la FIGURE 1 permet de recaler entre elles, ou localiser entre elles, une première image de profondeur d'une scène et une deuxième image de profondeur de la même scène, dans un référentiel commun qui peut être celui d'une des deux images ou un référentiel lié à ladite scène.

Chaque image de profondeur est une image représentée par un nuage de points ou de pixels, chaque point étant représenté par des données indiquant les coordonnées spatiales dudit point, ou par une distance et un angle solide, dans le référentiel du capteur ou de la caméra 3D ayant acquis ladite image 3D. Les données représentatives des points peuvent également comprendre des informations d'intensité lumineuse ou de niveaux de gris, et éventuellement des informations de couleur.

Le procédé 100 comprend une phase $102_1$ de traitement de la première image de profondeur.

La phase de traitement $102_1$ comprend une étape $104_1$ de détection de plans dans la première image. Cette étape $104_1$ peut être réalisée par des techniques connues, telles que par exemple une technique utilisant l'algorithme RANSAC. Suivant un exemple de réalisation nullement limitatif, l'étape de détection de plans $104_1$ peut être réalisée de la manière suivante, en considérant que la première image de profondeur est représentée par un nuage de points noté P1. Une première étape calcule les normales (N) de chaque point du nuage de points P à l'aide, par exemple, du gradient de profondeur : celui-ci est obtenu, en pratique, pour chaque point, en soustrayant la profondeur du point inférieur à celle du point supérieur (gradient vertical) et la profondeur du point de gauche à celle du point de droite (gradient horizontal). La normale au point est alors donnée par le produit vectoriel des deux vecteurs gradients. Puis une deuxième étape utilise les normales des points pour le calcul des plans dans le nuage de points. Cette étape consiste à :

- tirer aléatoirement 3 points parmi le nuage de points P1,
- calculer les paramètres d'un plan passant par ces 3 points puis,
- calculer le nombre de points de P1 appartenant à ce plan selon des critères tels que des distances inférieures à un seuil ou des normales proches.

L'étape de détection de plan $104_1$ peut être réitérée un nombre de fois prédéterminé. Un plan peut être considéré comme identifié si un nombre minimum de points a été identifié comme lui appartenant. Les points appartenant à un plan sont retirés de l'ensemble P1 de points, pour ne pas être utilisés pour l'identification des plans suivants.

L'étape $104_1$ de détection de plans fournit une liste des plans identifiés avec leurs paramètres descriptifs et l'ensemble des points de P leur appartenant.

Ensuite, une étape $106_1$, optionnelle, permet de détecter le vecteur de gravité dans la première image. Ce vecteur de gravité correspond au vecteur ayant la même direction que la force gravitationnelle, exprimée dans le repère de la caméra 3D qui a pris l'image. Pour obtenir ce vecteur, un plan grossièrement horizontal le plus étendu est recherché. Ce plan est considéré comme étant parfaitement orthogonal à la force gravitationnelle. La normale à ce plan donne le vecteur de gravité. Alternativement, le vecteur de gravité peut être renseigné par un capteur, tel qu'un accéléromètre ou un inclinomètre, détectant ledit vecteur de gravité au moment de la prise de la première image de profondeur.

Ensuite, une étape $108_1$ permet de sélectionner, parmi tous les plans identifiés à l'étape $104_1$, un premier groupe de plans horizontaux. Chaque plan présentant une normale parallèle (ou sensiblement parallèle avec une tolérance angulaire, par exemple de +/-5 degrés, ou +/-10 degrés) au vecteur de gravité est considéré comme étant horizontal. L'étape $108_1$ fournit donc un premier groupe de plans horizontaux.

Lors d'une étape $110_1$, pour chaque plan horizontal du premier groupe, une relation géométrique est détectée entre ce plan horizontal et chacun des autres plans horizontaux faisant partie du premier groupe. En particulier, dans le mode de mise en œuvre présenté, la relation géométrique entre deux plans horizontaux utilisée est la distance entre ces plans dans la direction du vecteur de gravité, c'est-à-dire dans la direction verticale. Les relations géométriques identifiées à l'étape $110_1$ sont mémorisées.

Une étape $112_1$ permet de sélectionner, parmi tous les plans identifiés à l'étape $104_1$, un deuxième groupe de plans verticaux. Chaque plan présentant une normale perpendiculaire (ou sensiblement perpendiculaire avec une tolérance angulaire, par exemple de +/-10 degrés) au vecteur de gravité est considéré comme étant vertical. L'étape $112_1$ fournit donc un deuxième groupe de plans verticaux.

Lors d'une étape $114_1$, pour chaque plan vertical du deuxième groupe, une relation géométrique est détectée entre ce plan vertical et chacun des autres plans verticaux faisant partie du deuxième groupe. En particulier, dans le mode de mise en œuvre présenté, la relation géométrique entre deux plans verticaux utilisée est l'angle relatif entre ces plans. Les relations géométriques identifiées à l'étape $114_1$ sont mémorisées.

Une phase de traitement $102_2$ est appliquée à la deuxième image de profondeur, en même temps que la phase de traitement $102_1$ ou après la phase de traitement $102_1$. Cette phase de traitement $102_2$ est identique à la phase de traitement $102_1$, et comprend des étapes $104_2$-$114_2$ identiques respectivement aux étapes $104_1$-$114_1$.

Lors d'une étape 116, chaque relation géométrique entre les plans horizontaux, identifiée pour la première image à l'étape $110_1$, est comparée à chaque relation géométrique entre les plans horizontaux, identifiée pour la deuxième image à l'étape $110_2$. Lorsque deux relations géométriques correspondent, alors cela indique que ces relations géométriques concernent les mêmes plans horizontaux sur les deux images. Ainsi, les plans horizontaux communs aux deux images sont identifiés.

Lors d'une étape 118, chaque relation géométrique entre les plans verticaux, identifiée pour la première image à l'étape $114_1$, est comparée à chaque relation géométrique entre les plans verticaux, identifiée pour la deuxième image à l'étape $114_2$. Lorsque deux relations géométriques correspondent, alors cela indique que ces relations géométriques concernent les mêmes plans verticaux sur les deux images. Ainsi, les plans verticaux communs aux deux images sont identifiés.

A l'issu de ces étapes, on obtient une mise en correspondance des plans verticaux et horizontaux respectifs des deux images.

Le procédé selon l'invention peut en outre comprendre des étapes supplémentaires de validation de la mise en correspondance des plans des deux images. Il est ainsi notamment possible de vérifier :

- si les vecteurs normaux et les distances à l'origine des plans sont similaires ;
- si les étendues des plans, représentées par leurs enveloppes convexes, se superposent ;
- si les points formant l'enveloppe convexe d'un plan identifié sur la première image sont proches de la surface du plan identifié sur la deuxième image ;
- si leurs distributions de couleurs ou leur apparence, par exemple obtenues à partir des histogrammes de couleur respectifs des deux plans, sont similaires.

Ces étapes supplémentaires de validation peuvent être réalisées, par exemple, par le calcul des heuristiques de comparaison des plans deux à deux, en appliquant au besoin une transformation géométrique (par exemple comme décrite ci-dessous) pour exprimer les plans de la seconde image dans le repère de la première image et ainsi les rendre comparables.

Lors d'une étape 120, une transformation géométrique, sous la forme d'une matrice homogène de déplacement, est calculée en considérant la position et l'orientation des plans communs identifiés dans chacune des images. Cette matrice permet par exemple d'exprimer les plans de la seconde image dans le repère de la première image. Elle permet ainsi de déterminer le déplacement ou la différence de position, dans la scène, du capteur ou de la caméra 3D qui a permis d'acquérir chacune des images.

Dans le mode de mise en œuvre présenté, la rotation de l'une des images, par rapport à l'autre des images, est déterminée à l'aide de plans verticaux communs. En effet, le vecteur de gravité, associé à un vecteur normal de plan vertical, étant orthogonal à la gravité, donne une base orthonormée. Les deux bases orthonormées qui se correspondent dans deux vues donnent directement l'angle de rotation du capteur selon chacun des axes. Les angles de rotation selon les trois axes sont donc calculés pour chaque plan correspondant et moyennés. Ensuite, le vecteur de translation horizontal est calculé en mettant en correspondance les deux droites d'intersection entre deux plans verticaux orthogonaux. A ce stade, on peut également obtenir la translation verticale en définissant la matrice d'erreur quadrique associée aux deux plans pour obtenir le vecteur qui minimise cette matrice.

De plus, les plans horizontaux communs permettent de calculer la translation verticale. En calculant la différence de distance à l'origine de chaque plan dans les deux images, on peut retrouver un vecteur de translation orienté selon la normale des plans horizontaux.

La matrice de déplacement déterminée à l'étape 120 peut ensuite être appliquée à l'une des images pour la recaler sur l'autre des images, lors d'une étape 122.

Les deux images sont alors recalées l'une avec l'autre dans un même repère, ou en d'autres termes, positionnées l'une et l'autre dans un même repère.

Les images ainsi recalées peuvent ensuite être exploitées indépendamment l'une de l'autre.

Elles peuvent également être fusionnées entre elles ou dans une représentation 3D plus large, selon des techniques connues. Cette fusion peut notamment être réalisée entre nuages de points, ou entre formes géométriques identifiées.

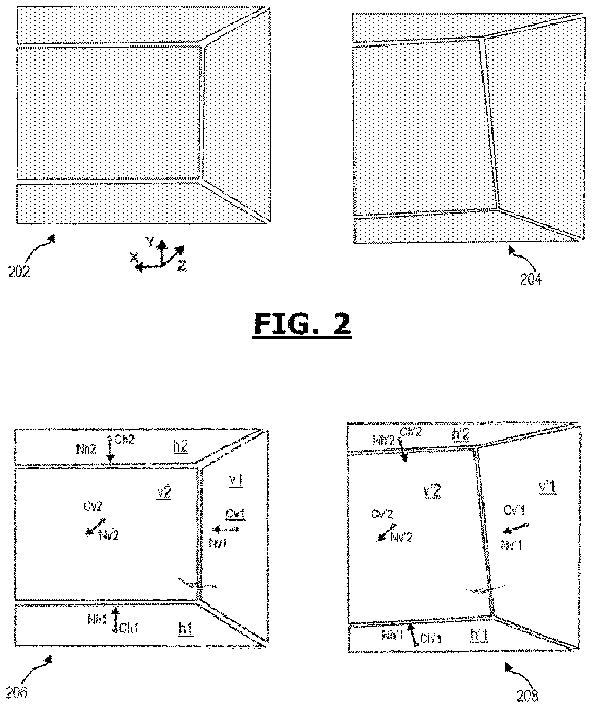

La FIGURE 2 est une représentation schématique d'un exemple d'application, très simplifié, d'un procédé de recalage d'images de profondeur selon l'invention, et en particulier du procédé 100 de la FIGURE 1.

La FIGURE 2 représente deux images de profondeur 202 et 204 d'une même scène suivant deux champs de vue différents. Le repère (X,Y,Z) est un repère associé au champ de vue de l'image 202, ou au capteur associé. Il est donc différent d'un repère associé au champ de vue de l'image 204.

Chacune des images 202 et 204 est traitée pour détecter, dans chaque image, des plans verticaux et les plans horizontaux. Le résultat obtenu pour l'image 202 est donné par l'image à base de plan 206, et pour l'image 204 par l'image à base de plan 208. Ainsi, pour chaque image, des plans horizontaux et des plans verticaux sont identifiés. Le vecteur normal de chaque plan est également indiqué.

Dans la première image 202, les plans horizontaux détectés à l'étape $108_1$ sont les suivants :

- un plan horizontal h1 dont :

  ○ le vecteur normal h1 est le vecteur Nh1 = (0, 1, 0)
  ○ le centre de gravité est le point Ch1 = (1, -1, 2)

- un plan horizontal h2 dont :

  ○ le vecteur normal est le vecteur Nh2 = (0, -1, 0)
  ○ le centre de gravité est le point Ch2 = (-2, 2, 1).

Les coordonnées peuvent être par exemple en mètres.

La relation de distance entre ces deux plans horizontaux, détectée à l'étape $110_1$, est donnée par une projection des points Ch1 et Ch2 (ou des vecteurs correspondant depuis l'origine du repère) sur un des vecteurs normaux, par exemple Nh1. Elle est donnée par la relation suivante :

$$\text{distance(Ch1, Ch2) = abs(Nh1.Ch1-Nh1.Ch2) = 3,}$$

avec « abs » la valeur absolue et « . » le produit scalaire.

Toujours dans la première image 202 les plans verticaux détectés à l'étape $112_1$ sont les suivants :

- un plan vertical v1 dont :

  ○ le vecteur normal est le vecteur Nv1 = (1, 0, 0),
  ○ le centre de gravité, défini comme la moyenne des positions de tous les points 3D appartenant au plan v1, est le point Cv1 = (-2, 1, 1)

- un plan vertical v2 dont :

  ○ le vecteur normal est le vecteur Nv2 = (0, 0, -1)

○ le centre de gravité est le point Cv2 = (1, 1, 3)

La relation angulaire entre ces deux plans verticaux, détectée à l'étape $114_1$, est donnée par la relation suivante : angle(Nv1, Nv2) = 90°.

Dans la deuxième image 204, les plans horizontaux détectés à l'étape $108_2$ sont les suivants :

- un plan horizontal h'1 dont :

  ○ le vecteur normal h1 est le vecteur Nh'1 = (-0.150, 0.985, 0.087)
  ○ le centre de gravité est le point Ch'1 = (2.203, -0.311, 1.203)

- un plan horizontal h'2 dont :

  ○ le vecteur normal est le vecteur Nh'2 = (0.150, -0.985, - 0.087)
  ○ le centre de gravité est le point Ch'2 = (-1.306, 2.122, 2.074).

La relation de distance entre ces deux plans horizontaux, détectée à l'étape $110_2$ et calculée comme précédemment, est donnée par la relation suivante :

$$distance(Ch'1, Ch'2) = abs(Nh'1.Ch'1-Nh'1.Ch'2) = 3.$$

Toujours dans la deuxième image 204 les plans verticaux détectés à l'étape $112_2$ sont les suivants :

- un plan vertical v'1 dont :

  ○ le vecteur normal est le vecteur Nv'1 = (0.853, 0.174, - 0.492),
  ○ le centre de gravité est le point Cv'1 = (-1.156, 1.137, 1.988)

- un plan vertical v'2 dont :

  ○ le vecteur normal est le vecteur Nv'2 = (-0.5, 0, -0.866)
  ○ le centre de gravité est le point Cv'2 = (2.402, 1.658, 2.242).

La relation angulaire entre ces deux plans verticaux, détectée à l'étape $114_2$, est donnée par la relation suivante : angle(Nv'1, Nv'2) = 90°.

En comparant les relations angulaires angle(Nv1, Nv2) et angle(Nv'1, Nv'2), on détecte une égalité :

$$angle(Nv1, Nv2)=angle(Nv'1, Nv'2).$$

Cela permet de confirmer que les plans verticaux (v1,v2) dans la première image 202 sont bien les plans verticaux (v'1,v'2) dans la deuxième image 204.

De plus, en comparant les relations distance(Ch1, Ch2) et distance(Ch'1, Ch'2), on détecte une égalité :

$$distance(Ch1, Ch2)=distance(Ch'1, Ch'2)$$

Cela permet de confirmer que les plans horizontaux (h1, h2) dans la première image 202 sont bien les plans horizontaux (h'1, h'2) dans la deuxième image 204.

En utilisant, les caractéristiques des plans verticaux et des plans horizontaux communs aux deux images 202 et 204, une matrice de déplacement homogène est calculée. Dans l'exemple donné, la matrice de déplacement homogène (R, T) est la suivante :

- Rotation R = (0°, 30°, 10°),
- Translation T = (0.20, 0.50, 0.05)

On peut noter qu'il existe une relation entre les différents paramètres définissant les plans et les vecteurs R et T. Par exemple : Nv'1 = R x Nv1 et Cv'1 = R x Cv1 + T.

La rotation R est calculée à l'aide des plans verticaux v1, v2, v'1, v'2 et du vecteur de gravité.

Les composantes de translation horizontale (en x et z) de T sont calculées à l'aide des plans verticaux v1, v2, v'1 et v'2.

La composante de translation verticale (y) de T est calculée à l'aide des plans horizontaux h1, h2, h'1 et h'2.

La transformation T ainsi calculée est appliquée à la deuxième image 204 afin d'exprimer cette image 204 dans le repère (X,Y,Z) de la première image 202.

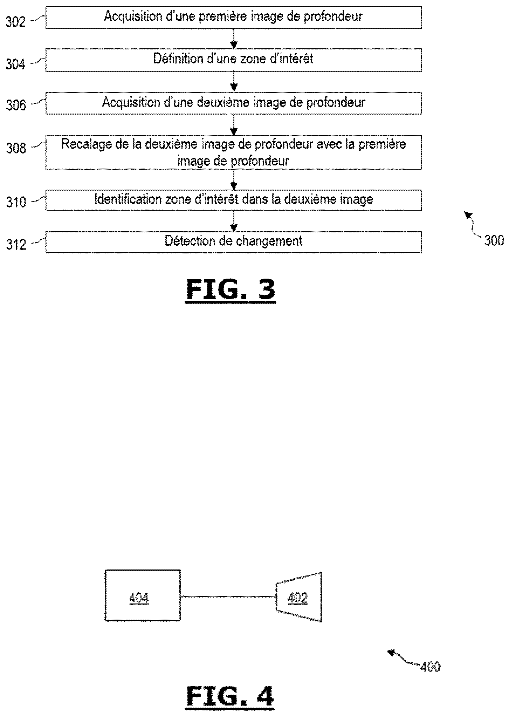

La FIGURE 3 est une représentation schématique d'un exemple de réalisation non limitatif d'un procédé de surveillance d'une zone d'intérêt dans une scène réelle, selon l'invention.

Le procédé 300, représenté sur la FIGURE 3, comprend une étape 302 d'acquisition d'une première image de profondeur d'une scène, suivant un premier champ de vue. Cette image de profondeur peut être acquise par une première caméra 3D.

Une zone d'intérêt peut être définie, lors d'une étape 304, dans cette image de profondeur. La zone d'intérêt peut correspondre à une surface, ou un volume, définie dans ladite première image, et in fine par rapport à la scène réelle. Cette zone d'intérêt peut notamment être définie par rapport à des objets réels ou modélisés de la scène.

Puis le procédé selon l'invention peut comprendre une étape 306 d'acquisition d'une deuxième image de profondeur de la scène réelle, suivant un deuxième champ de vue, identique ou différent du premier champ de vue. Cette deuxième image de profondeur peut être prise par la même caméra 3D que la première image de profondeur, ou par une autre caméra 3D.

Cette deuxième image de profondeur est recalée sur la première image de profondeur lors d'une étape 308, en utilisant le procédé de recalage de deux images de profondeur selon l'invention, et en particulier le procédé 100 de la FIGURE 1. Ce recalage permet de localiser ou d'identifier dans la deuxième image les objets, réels ou modélisés par exemple par des plans, de la première image.

La zone d'intérêt peut alors être identifiée et localisée précisément dans la deuxième image de profondeur lors d'une étape 310, par rapport à ces objets réels ou modélisés identifiés.

Lors d'une étape 312, un changement est détecté, le cas échéant, dans la zone d'intérêt. Ce changement peut être un changement d'état par rapport à un état prédéterminé, tel que par exemple la détection d'un objet dans une zone d'intérêt supposément vide. Ce changement peut être également détecté par comparaison, auquel cas la partie de la deuxième image correspondant à la zone d'intérêt est comparée à la partie de la première image correspondant à la zone d'intérêt, pour détecter un changement au sein de ladite zone d'intérêt, tel que par exemple une apparition, une disparition, un déplacement, etc. d'un objet.

Le résultat de la détection peut être utilisé pour déclencher une fonction préalablement définie.

La fonction préalablement définie peut être fonction du changement détecté. Ainsi, un déplacement d'un objet dans la zone d'intérêt peut déclencher une première fonction, et une apparition d'un nouvel dans la zone peut déclencher une deuxième fonction, etc.

Le procédé selon l'invention permet ainsi notamment de corriger des déplacements du capteur 3D entre la première et la deuxième image de profondeur, de sorte que la zone d'intérêt soit toujours localisée à la même position par rapport aux objets de la scène réelle.

La FIGURE 4 est une représentation schématique d'un exemple de réalisation non limitatif d'un dispositif de surveillance d'une zone d'intérêt dans une scène réelle, selon l'invention.

Le dispositif 400, représenté sur la FIGURE 4, comprend au moins une caméra 3D 402 pour la prise d'image de profondeur.

Le dispositif 400 comprend aussi une unité de calcul 404, configurée pour mettre en œuvre les étapes du procédé de surveillance d'une zone d'intérêt dans une scène réelle, selon l'invention, et en particulier du procédé 300 de la FIGURE 3.

L'unité de calcul 404 peut être reliée à la caméra 3D 402 par une liaison filaire ou sans fil. L'unité de calcul 404 et la caméra 402 peuvent être disposées dans un même dispositif monobloc, ou peuvent être distantes l'une de l'autre.

L'unité de calcul 404 peut être tout appareil électronique, ou informatique, capable d'exécuter les étapes du procédé de surveillance d'une zone d'intérêt dans une scène réelle, selon l'invention. En particulier, l'unité de calcul 404 comprend au moins un calculateur, ou au moins un processeur, ou encore au moins une puce électronique, chargée d'instructions informatiques pour mettre en œuvre les étapes du procédé de surveillance d'une zone d'intérêt dans une scène réelle, selon l'invention.

L'unité de calcul 404 peut être, par exemple, une carte graphique ou un ordinateur, on un microcontrôleur.

Suivant un exemple de mise en œuvre, le dispositif 400 peut comprendre un dispositif de type capteur virtuel, tel que décrit par exemple dans le document EP 2 943 851 A1. Ce dispositif peut se présenter sous la forme d'un boîtier avec une caméra 3D 402, par exemple à temps de vol, qui acquiert de manière périodique une image tridimensionnelle d'un champ de vue dans son environnement. Il peut comprendre également un microcontrôleur 404, intégré dans le boîtier, qui gère notamment l'acquisition et le traitement des images 3D. Le dispositif comprend une interface homme-machine qui permet de définir des zones d'intérêt dans le champ de vue. Ces zones d'intérêt sont des zones de l'espace ou associées à des objets du champ de vue qui sont surveillées. Lorsqu'un évènement prédéterminé y est détecté, tel que par exemple l'apparition d'un objet ou d'une main, le dispositif 400 déclenche une action également prédéterminée, telle que la mise en route d'un appareil ou le déclenchement d'une commande.

Le dispositif 400 implémente le procédé selon l'invention tel que décrit précédemment pour permettre un recalage des images 3D et de la position des zones d'intérêt en cas de déplacement du boîtier qui modifierait le champ de vue.

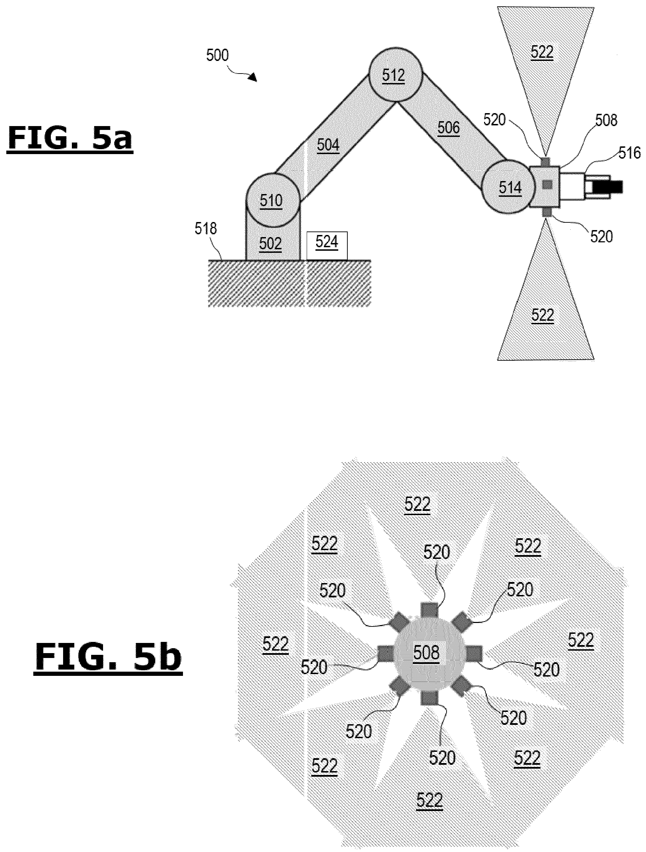

Les FIGURES 5a et 5b sont des représentations schématiques d'un exemple de réalisation non limitatif d'un robot selon l'invention.

La FIGURE 5a est une représentation schématique du robot vue de profil, et la FIGURE 5b est une représentation, vue de face, du segment distal du robot.

Le robot 500 de la FIGURE 5 est un bras robotisé comprenant plusieurs segments 502-508 : le segment 502 étant le segment de base du robot 500, et le segment 508 étant le segment distal du robot. Les segments 504, 506 et 508 sont mobiles en rotation grâce à des articulations 510-514, et des moteurs (non représentés) au niveau de ces articulations 510-514.

Le segment distal 508 peut être équipé d'un outil, tel qu'une pince 516 par exemple comme représenté sur la FIGURE 5a.

Le segment de base peut être fixe sur un sol 518. Alternativement, le segment de base peut être muni de moyens permettant au robot de se déplacer, telle que par exemple au moins une roue ou une chenille.

Selon l'invention, le robot embarque au moins une caméra 3D.

Dans l'exemple des FIGURES 5a et 5b, le robot 500 est équipé de plusieurs, et exactement huit, caméras 3D 520.

Chaque caméra 3D 520 peut être une caméra temps de vol par exemple.

Les caméras 3D 520 sont disposées autour d'un segment du robot, et en particulier autour du segment distal 508.

Les caméras 520 sont plus particulièrement distribuées suivant un pas angulaire constant.

Chaque caméra 3D 520 permet de réaliser une image en profondeur d'une partie de la scène réelle constituée par l'environnement du robot 500, suivant un champ de vue 522, radial par rapport au segment distal 508. Le champ de vue 522 d'une caméra 3D 520 est différent du champ de vue 522 d'une autre caméra 3D.

Suivant un exemple de réalisation, les champs de vue 522 de deux caméra 3D adjacentes comportent une zone de recouvrement au-delà d'une certaine distance. Bien entendu, les champs de vue 522 de deux caméras 3D adjacentes peuvent ne pas comporter de zone de recouvrement.

Comme montré sur la FIGURE 5b, l'ensemble des champs de vue 522 des caméras 3D 520 couvrent une vue circulaire complète autour du segment distal 508. Il est clair qu'une vue seulement partielle de l'environnement est détectée pour une position du bras robotisé 500. Par contre, lorsque le bras robotisé se déplace d'autres parties de la scène vont être vues et détectées par les caméras 3D.

Bien entendu, dans d'autres exemples de mise en œuvre, le robot 500 peut comprendre des caméras 3D disposées différemment sur un segment, et/ou disposées sur différents segments. Dans d'autres exemples de configuration, les caméras 3D peuvent être disposées de façon à ce que leur champ de vue total combiné permette de saisir la scène réelle autour du robot dans son ensemble, au moins pour une position du robot 500.

Le bras robotisé 500 est en outre muni d'une unité de traitement 524, qui peut être un ordinateur, un calculateur, un processeur ou similaire. L'unité de traitement 524 est reliée à chacune des caméras 520, de manière filaire ou sans fil. Elle reçoit de chaque caméra 3D, chaque image de profondeur acquise par ladite caméra 3D pour traiter ladite image. L'unité de traitement 524 comprend des instructions informatiques pour mettre en œuvre le procédé selon l'invention.

Dans l'exemple représenté, l'unité de traitement 524 est représentée comme un module individuel distinct. Bien entendu, l'unité de traitement 524 peut être combinée, ou intégrée dans, un autre module ou dans un calculateur du bras robotisé 500.

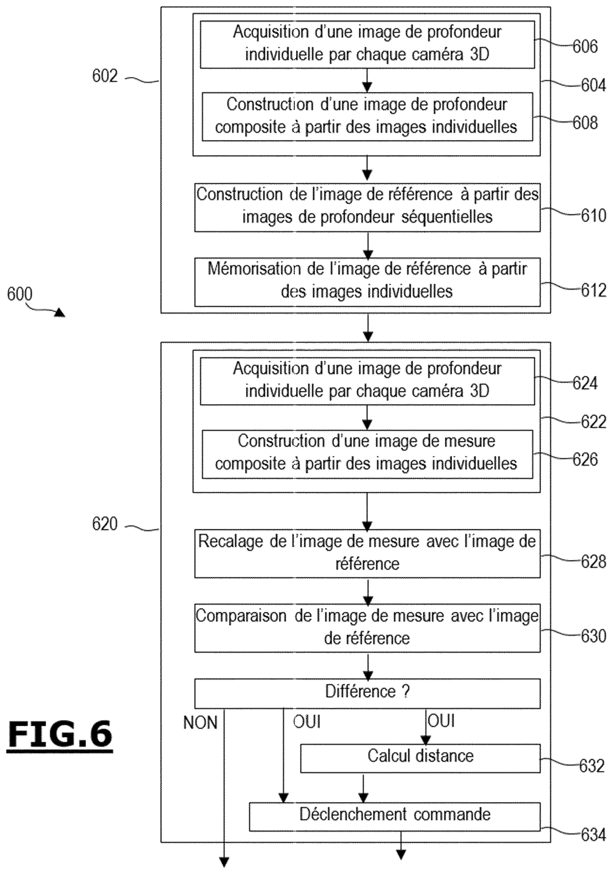

La FIGURE 6 est une représentation schématique d'un exemple de réalisation non limitatif d'un procédé de surveillance de l'environnement d'un robot, selon l'invention.

Le procédé 600, représenté sur la FIGURE 6, peut en particulier être mis en œuvre par le robot 500 des FIGURES 1a et 1b.

Le procédé 600 comprend une phase 602 d'obtention d'une image de profondeur de l'environnement du robot, sans la présence d'opérateurs ou d'objets non prévus. Cette image de l'environnement du robot sera utilisée comme image de référence pour détecter tout changement relatif à un objet dans l'environnement du robot.

La phase 602 comprend une étape 604 d'obtention d'une image de profondeur, à un instant d'acquisition, pour une configuration donnée du bras robotisé. Lorsque le robot est équipé d'une unique caméra 3D, l'image de profondeur correspond à l'image fournie par ladite unique caméra 3D.

Lorsque le robot est équipé de plusieurs caméras 3D, comme par exemple le robot 500 des FIGURES 5a et 5b, alors une image de profondeur composite est construite à partir des images de profondeur individuelles prises par lesdites caméras 3D, audit instant d'acquisition. Dans ce cas, l'étape 604 comprend les étapes suivantes :

- lors d'une étape 606 réalisée audit instant d'acquisition, chaque caméra 3D prend une image de profondeur individuelle ; et
- lors d'une étape 608, les images de profondeur individuelles sont combinées, pour obtenir une image de profondeur composite pour l'ensemble des caméras 3D.

La combinaison des images de profondeur individuelles pour obtenir une seule image de profondeur composite, à un instant d'acquisition, peut être réalisée suivant différentes techniques.

Suivant une première technique, lorsque les images de profondeur individuelles comprennent des zones de recouvrement, c'est-à-dire lorsque les champs de vue des caméras 3D comportent des zones recouvrement, alors la combinaison des images de profondeur individuelles peut être réalisée en détectant ces zones de recouvrement, et en utilisant ces zones de recouvrement pour concaténer les images de profondeur individuelles en vue d'obtenir une image de profondeur composite.

Suivant une deuxième technique, qui peut être utilisée seule ou en combinaison avec la première technique, la combinaison des images de profondeur individuelles peut être réalisée en utilisant les configurations relatives des caméras 3D. En effet, la position et l'orientation de chaque caméra 3D est connue, dans la mesure bien entendu où elle est positionnée de manière connue sur le robot. Par conséquent, en utilisant les positions relatives et les orientations relatives des caméras 3D entre elles, il est possible de positionner entre-elles les images de profondeur individuelles prises par ces caméras 3D. Concrètement, pour chaque image de profondeur individuelle prise par une caméra 3D, la position de la caméra 3D correspond au centre ou au point d'origine de ladite image de profondeur individuelle, et l'orientation de chaque caméra 3D correspond à la direction selon laquelle l'image de profondeur individuelle a été prise. En utilisant ces deux informations, les images de profondeur individuelles peuvent être positionnées les unes par rapport aux autres, pour obtenir une seule image de profondeur composite pour l'ensemble des caméras 3D, à un instant d'acquisition.

L'étape 604 peut être réitérée autant de fois que souhaité, de manière séquentielle, à différents instants d'acquisition, chaque instant d'acquisition correspondant à une configuration différente du robot. Ainsi, pour chaque configuration du robot, une image de profondeur composite est obtenue.

En particulier, l'étape 604 peut être réitérée de manière séquentielle pendant que le robot est mis en mouvement, continu ou non, suivant une trajectoire prédéterminée en vue d'imager l'environnement du robot dans une large mesure, et en particulier dans sa totalité. Chaque itération de l'étape 204 permet d'obtenir une image de profondeur composite.

Lors d'une étape 610, l'image de référence est construite à partir des différentes images de profondeur composites obtenues séquentiellement pour différentes configurations du robot. La construction d'une image de référence à partir de plusieurs images de profondeur composites acquises séquentiellement à différents instants d'acquisition peut être réalisée suivant différentes techniques.

Suivant une première technique, les images de profondeur composites séquentielles peuvent être acquises en s'assurant qu'elles comprennent des zones de recouvrement. Dans ce cas, la construction de l'image de référence peut être réalisée en détectant les zones de recouvrement entre les images de profondeur composites et en utilisant ces zones de recouvrement pour concaténer les images de profondeur composites séquentielles entre elles.

Suivant une deuxième technique, qui peut être utilisée seule ou en combinaison avec la première technique, la construction de l'image de référence à partir des images de profondeur composites séquentielles peut être réalisée en utilisant la configuration géométrique du robot, pour chaque image de profondeur. Dans le cas d'un bras robotisé, la configuration géométrique du robot est donnée par :

- les dimensions des différents segments mobiles du robot : ces dimensions sont connues ; et
- les orientations relatives des segments mobiles : ces orientations peuvent être connues à partir des articulations, ou des moteurs placés dans les articulations.

Ainsi, en connaissant la configuration géométrique du robot à un instant d'acquisition, il est possible de positionner, dans un repère lié à l'environnement, l'image de profondeur obtenue pour cet instant d'acquisition.

L'image de référence ainsi obtenue est mémorisée lors d'une étape 612. Cette image de référence est ainsi constituée de l'ensemble des images de profondeur acquises et fusionnées de sorte à constituer une image représentant tout ou partie de l'environnement du robot.

Dans l'exemple décrit, l'étape 608 de construction d'une image de profondeur composite, à partir de plusieurs images de profondeur individuelles, est réalisée tout de suite après l'acquisition desdites images de profondeur individuelles. Alternativement, cette étape 608 peut être réalisée juste avant l'étape 610 de construction de l'image de référence. Suivant encore une autre alternative, les étapes 608 et 610 peuvent être réalisées en même temps, au sein d'une seule et unique étape, prenant en compte toutes les images de profondeur individuelles acquises pour chacun des instants d'acquisition séquentiels.

Le procédé 600 comprend en outre au moins une itération d'une phase 620 de détection réalisée lorsque le robot est en cours de fonctionnement. Cette phase de détection 620 est réalisée pour détecter, à un instant de mesure, un changement relatif à un objet se trouvant dans l'environnement du robot.

La phase de détection 620 comprend une étape 622 d'acquisition d'une image de profondeur, dite image de mesure, à l'instant de mesure. Cette image de mesure sera ensuite comparée à l'image de référence, mémorisée à l'étape 612, pour détecter un changement relatif à un objet se trouvant dans l'environnement du robot.

L'image de mesure, acquise à un instant de mesure, peut être une image de profondeur individuelle acquise par une caméra 3D. Dans ce cas, la phase de détection peut être réalisée individuellement pour chaque image de profondeur individuelle acquise par chaque caméra 3D, audit instant de mesure.

Alternativement, l'image de mesure acquise à un instant de mesure peut être une image de mesure composite construite à partir des images de profondeur individuelles acquises par toutes les caméras 3D, audit instant de mesure. Dans ce cas, l'étape 622 comprend une étape 624 d'acquisition d'une image de profondeur individuelle par chaque caméra 3D. Puis, lors d'une étape 626, l'image de mesure composite est construite à partir des images de profondeur individuelles acquise par toutes les caméras 3D, par exemple en utilisant l'une des techniques décrites plus haut en référence à l'étape 608.

Lors d'une étape 628, l'image de mesure, ou l'image de mesure composite, est recalée avec l'image de référence. Cette opération de recalage a pour but de localiser ou positionner l'image de mesure dans le repère ou le référentiel de l'image de référence.

Le recalage des images de référence et de mesure peut être réalisé par le procédé de recalage d'images de profondeur selon l'invention, et en particulier par le procédé 100 de la FIGURE 1.

Une fois que l'image de mesure (composite) est recalée avec l'image de référence, les images recalées sont comparées entre elles, lors d'une étape 630, pour détecter un changement relatif à un objet dans l'image de mesure composite.

Dans le mode de mise en œuvre présenté, la comparaison des images est réalisée à partir des mesures de distance. Elle peut comprendre par exemple une détection de zones de l'image de mesure avec des distances ou des positions différentes à celles dans les zones correspondantes dans l'image de référence. Cette différence peut être due par exemple à l'apparition, à la disparition ou au déplacement d'un objet ou d'un opérateur.

Cette comparaison peut être réalisée entre images sous la forme de nuage de points.

Lorsque l'image de référence est modélisée par des éléments géométriques, cette comparaison peut être réalisée, soit avec une image de mesure sous la forme de nuage de points, soit avec une image de mesure également modélisée par des éléments géométriques.

Le choix de la méthode de comparaison peut dépendre des objets ou des éléments recherchés.

Par exemple, dans une situation où l'environnement du robot est constitué par une pièce avec des murs et des éléments de mobilier (convoyeur, baie ou armoire, ...) et où on cherche à détecter des objets de forme non déterminée (opérateur, ...), il peut être avantageux :

- de modéliser l'image de référence avec des éléments géométriques, et en particulier des plans ;
- de modéliser l'image de mesure avec des éléments géométriques, et en particulier des plans, pour l'opération de recalage ; et
- d'utiliser l'image de mesure sous la forme de nuage de points pour détecter les changements relatifs aux objets.

Ainsi, le recalage peut être effectué d'une manière précise et peu consommatrice de puissance de calcul, et l'opération de comparaison permet d'extraire les points de mesure correspondant aux objets différents, sans hypothèses sur leur forme. On peut ainsi analyser ces objets, par exemple en vue de les identifier.

Lorsqu'aucune différence significative n'est constatée entre l'image de référence et l'image de mesure composite alors il est mis fin à cette itération de la phase de détection 620. Une nouvelle itération de la phase de détection 620 peut être réalisée, à tout moment.

Lorsqu'une différence significative relative à un objet est détectée entre l'image de référence et l'image de mesure composite, cette différence est analysée pour décider si une action est nécessaire. Dans ce cas, une commande du robot est déclenchée lors d'une étape 634.

Par exemple, en cas d'apparition d'un objet, la phase de détection 620 peut en outre comprendre une étape 632 de calcul d'une distance relative dudit objet. Cette distance relative dudit objet est donnée dans l'image de mesure (composite) puisque cette dernière comprend une information de distance pour chaque pixel de ladite image.

Lorsque la distance déterminée à l'étape 632 est inférieure à un seuil prédéterminé alors une commande du robot est déclenchée lors de l'étape 634. Des exemples de commandes peuvent comprendre :

- un arrêt d'urgence, en particulier si un objet approchant est identifié comme un opérateur ;
- un changement de vitesse ou un ralentissement ;
- une modification de trajectoire, avec par exemple une génération d'une trajectoire de contournement ;
- un déclanchement d'une tâche spécifique, ou le paramétrage d'une tâche, par exemple en cas de détection d'un chariot avec des objets à manipuler.

Il est également possible de définir des zones dans la scène de référence qui feront l'objet d'un traitement particulier en cas par exemple de détection d'un élément dans ces zones. Il est par exemple de définir :

- une zone proche, et/ou une zone lointaine ;
- une zone de sécurité où un opérateur provoque un ralentissement, ou une zone d'exclusion avec arrêt du robot ;
- une zone liée à l'exécution d'une tâche (position attendue d'un convoyeur, ...).

Bien sûr, l'invention n'est pas limitée aux exemples qui viennent d'être décrits et de nombreux aménagements peuvent être apportés à ces exemples sans sortir du cadre de l'invention.

**Revendications**

1. Procédé (100) de recalage de deux images de profondeur (202,204) d'une scène réelle, ledit procédé (100) comprenant les étapes suivantes :

   - pour chacune desdites images de profondeur :

     - détection ($108_1$,$112_1$,$108_2$,$112_2$) d'une pluralité de formes géométriques dans ladite image de profondeur (202,204), et
     - détermination ($110_1$,$110_2$,$114_1$,$114_2$) d'au moins une relation géométrique entre au moins deux formes géométriques de ladite pluralité de formes géométriques ;

   - identification (116,118) de formes géométriques communes auxdites deux images (202,204) par comparaison des relations géométriques détectées pour l'une (202) des images à celles détectées pour l'autre (204) des images ;
   - calcul (120), en fonction desdites formes géométriques communes, d'une transformation géométrique entre lesdites images (202,204) ; et
   - recalage (122) de l'une (204) desdites images, par rapport à l'autre (202) desdites images, en fonction de ladite transformation géométrique.

2. Procédé (100) selon la revendication précédente, **caractérisé en ce que**, pour chaque image (202,204), l'étape de détection ($108_1$,$112_1$,$108_2$,$112_2$) comprend une détection d'au moins un groupe de formes géométriques présentant toutes une orientation similaire relativement à une direction de référence prédéterminée dans la scène.

3. Procédé (100) selon la revendication précédente, **caractérisé en ce que**, pour chaque image (202,204), l'étape de détection ($108_1$,$112_1$,$108_2$,$112_2$) comprend une détection :

   - d'un premier groupe de formes géométriques, présentant toutes une première orientation relativement à la direction de référence, en particulier une orientation parallèle à la direction de référence ; et
   - d'au moins un deuxième groupe de formes géométriques présentant toutes une même deuxième orientation relativement à la direction de référence, différente de la première orientation, en particulier orthogonale à ladite première orientation.

4. Procédé (100) selon l'une quelconque des revendications 2 ou 3, **caractérisé en ce que** la direction de référence est la direction du vecteur gravité dans la scène, et l'étape de détection ($108_1$,$108_2$) comprend une détection d'un groupe de formes géométriques (h1,h2,h'1,h'2) présentant une orientation horizontale dans la scène.

5. Procédé (100) selon la revendication précédente, **caractérisé en ce que** la relation géométrique entre deux formes géométriques horizontales (h1,h2,h'1,h'2) comprend une distance entre les deux formes, dans la direction du vecteur gravité.

6. Procédé (100) selon l'une quelconque des revendications 2 à 5, **caractérisé en ce que** la direction de référence est la direction du vecteur gravité dans la scène, et l'étape de détection ($112_1$,$112_2$) comprend une détection d'un groupe de formes géométriques (v1,v2,v'1,v'2) présentant une orientation verticale dans la scène.

7. Procédé (100) selon la revendication précédente, **caractérisé en ce que** la relation géométrique entre deux formes géométriques verticales (v1,v2,v'1,v'2) comprend au moins un angle entre les deux formes géométriques.

8. Procédé (100) selon l'une quelconque des revendications 4 à 7, **caractérisé en ce que** le vecteur gravité est :

   - détecté et renseigné par un capteur pour chaque image ; et/ou
   - déterminé, dans chaque image (202,204), par analyse de ladite image (202,204).

9. Procédé (100) selon l'une quelconque des revendications précédentes, **caractérisé en ce que** l'étape $(110_1,110_2,114_1,114_2)$ de détermination de relations géométriques comprend, pour chaque forme géométrique, respectivement pour chaque forme géométrique d'un groupe, une détermination d'une relation géométrique entre ladite forme géométrique et chacune des autres formes géométriques, respectivement chacune des autres formes géométriques dudit groupe, de sorte qu'une relation géométrique est déterminée pour chaque combinaison par paires des formes géométriques .

10. Procédé (100) selon l'une quelconque des revendications précédentes, **caractérisé en ce qu'**au moins une forme géométrique est une ligne, un plan ou une forme géométrique tridimensionnelle,

11. Procédé (100) selon l'une quelconque des revendications précédentes, **caractérisé en ce que** toutes les formes géométriques sont des plans.

12. Procédé (100) selon l'une quelconque des revendications précédentes, **caractérisé en ce que** le calcul de la transformation géométrique comprend un calcul d'une matrice de transformation construite à partir :

   - d'une différence, au moins dans une direction donnée, entre la position d'au moins une forme géométrique (h1,h2,v1,v2) dans l'une (202) desdites images et la position de ladite au moins une forme géométrique (h'1,h'2,v'1,v'2) dans l'autre (204) desdites images ; et
   - d'une différence d'orientation entre au moins un repère orthonormé associé à au moins une forme géométrique (v1,v2) dans l'une (202) desdites images et ledit au moins un repère orthonormé associé à ladite au moins une forme géométrique (v'1,v'2) dans l'autre (204) desdites images.

13. Procédé (300) de surveillance d'une zone d'intérêt dans une scène, définie dans une première image de profondeur de ladite scène préalablement acquise suivant un premier champ de vue, ledit procédé (300) comprenant au moins une itération des étapes suivantes :

   - acquisition (306) d'une deuxième image suivant un deuxième champ de vue ;
   - recalage (308) desdites première et deuxième images de profondeur par le procédé de recalage (100) selon l'une quelconque des revendications précédentes ;
   - identification (310) de la zone d'intérêt dans ladite deuxième image de profondeur ; et
   - détection (312) d'un changement, ou non, dans ladite zone d'intérêt.

14. Dispositif (400) de surveillance d'une zone d'intérêt dans une scène réelle comprenant :

   - au moins une caméra 3D (402), et
   - au moins un moyen de calcul (404) ;

   configurés pour mettre en œuvre toutes les étapes du procédé (300) selon la revendication précédente.

15. Procédé (600) de surveillance de l'environnement d'un robot (500) comprenant :

   - une phase (602) d'obtention d'une image de profondeur de l'environnement dudit robot (500), dite image de référence, par au moins une caméra 3D (520) portée par ledit robot (500) ; et
   - au moins une itération d'une phase (620) de détection comprenant les étapes suivantes :

     - acquisition (622), à un instant de mesure, d'une image de profondeur dudit environnement, dite image de mesure, par ladite au moins une caméra 3D (520),
     - recalage (628) desdites images de référence et de mesure par le procédé selon l'une quelconque des revendications 1 à 12, et

- détection (630) d'un changement relatif à au moins un objet environnant se trouvant dans l'environnement dudit robot (500) par comparaison desdites images de référence et de mesure.

16. Dispositif de surveillance de l'environnement d'un robot comprenant :

- au moins une caméra 3D (520), et
- au moins un moyen de calcul (524) ;

configurés pour mettre en œuvre toutes les étapes du procédé (600) selon la revendication précédente.

17. Robot (500) équipé d'un dispositif de surveillance selon la revendication précédente.

**Patentansprüche**

1. Verfahren (100) zum Registrieren von zwei Tiefenbildern (202,204) einer realen Szene, das Verfahren (100) umfassend die folgenden Schritte:

- für jedes der Tiefenbilder:

- Erfassen ($108_1$,$112_1$,$108_2$,$112_2$) einer Vielzahl von geometrischen Formen in dem Tiefenbild (202,204), und
- Bestimmen ($110_1$,$110_2$,$114_1$,$114_2$) mindestens einer geometrischen Beziehung zwischen mindestens zwei geometrischen Formen der Vielzahl von geometrischen Formen;

- Identifizieren (116,118) von gemeinsamen geometrischen Formen in den zwei Bildern (202,204) durch Vergleichen der geometrischen Beziehungen, die für eines (202) der Bilder erfasst werden, mit denjenigen, die für das andere (204) der Bilder erfasst werden;
- Berechnen (120) einer geometrischen Transformation zwischen den Bildern (202,204) in Abhängigkeit von den gemeinsamen geometrischen Formen; und
- Registrieren (122) eines (204) der Bilder in Bezug auf das andere (202) der Bilder in Abhängigkeit von der geometrischen Transformation.

2. Verfahren (100) nach dem vorstehenden Anspruch, **dadurch gekennzeichnet, dass** für jedes Bild (202,204) der Erfassungsschritt ($108_1$,$112_1$,$108_2$,$112_2$) eine Erfassung mindestens einer Gruppe von geometrischen Formen umfasst, die alle eine ähnliche Orientierung relativ zu einer zuvor bestimmten Referenzrichtung in der Szene aufweisen.

3. Verfahren (100) nach dem vorstehenden Anspruch, **dadurch gekennzeichnet, dass** für jedes Bild (202,204), der Erfassungsschritt ($108_1$,$112_1$,$108_2$,$112_2$) eine Erfassung umfasst:

- einer ersten Gruppe von geometrischen Formen, die alle eine erste Orientierung relativ zu der Referenzrichtung aufweisen, insbesondere eine Orientierung, die zu der Referenzrichtung parallel ist; und
- mindestens einer zweiten Gruppe von geometrischen Formen, die alle eine gleiche zweite Orientierung relativ zu der Referenzrichtung aufweisen, die sich von der ersten Orientierung unterscheidet, die insbesondere orthogonal zu der ersten Orientierung ist.

4. Verfahren (100) nach einem der Ansprüche 2 oder 3, **dadurch gekennzeichnet, dass** die Referenzrichtung die Richtung des Gravitationsvektors in der Szene ist und der Erfassungsschritt ($108_1$,$108_2$) eine Erfassung einer Gruppe von geometrischen Formen (h1,h2,h'1,h'2) umfasst, die eine horizontale Orientierung in der Szene aufweisen.

5. Verfahren (100) nach dem vorstehenden Anspruch, **dadurch gekennzeichnet, dass** die geometrische Beziehung zwischen zwei horizontalen geometrischen Formen (h1,h2,h'1,h'2) einen Abstand zwischen den zwei Formen in der Richtung des Gravitationsvektors umfasst.

6. Verfahren (100) nach einem der Ansprüche 2 bis 5, **dadurch gekennzeichnet, dass** die Referenzrichtung die Richtung des Gravitationsvektors in der Szene ist und der Erfassungsschritt ($112_1$,$112_2$) eine Erfassung einer Gruppe von geometrischen Formen (v1,v2,v'1,v'2) umfasst, die eine vertikale Orientierung in der Szene aufweisen.

7. Verfahren (100) nach dem vorstehenden Anspruch, **dadurch gekennzeichnet, dass** die geometrische Beziehung zwischen zwei vertikalen geometrischen Formen (v1,v2,v'1,v'2) mindestens einen Winkel zwischen den zwei geometrischen Formen umfasst.

8. Verfahren (100) nach einem der Ansprüche 4 bis 7, **dadurch gekennzeichnet, dass** der Gravitationsvektor ist:

   - durch einen Sensor für jedes Bild erfasst und übermittelt; und/oder
   - in jedem Bild (202,204) durch Analyse des Bildes (202,204) bestimmt.

9. Verfahren (100) nach einem der vorstehenden Ansprüche, **dadurch gekennzeichnet, dass** der Schritt $(110_1, 110_2, 114_1, 114_2)$ zum Bestimmen von geometrischen Beziehungen für jede geometrische Form, beziehungsweise für jede geometrische Form einer Gruppe, eine Bestimmung einer geometrischen Beziehung zwischen der geometrischen Form und jeder der anderen geometrischen Formen, beziehungsweise jeder der anderen geometrischen Formen der Gruppe, umfasst, so dass eine geometrische Beziehung für jede paarweise Kombination der geometrischen Formen bestimmt wird.

10. Verfahren (100) nach einem der vorstehenden Ansprüche, **dadurch gekennzeichnet, dass** mindestens eine geometrische Form eine Linie, eine Ebene oder eine dreidimensionale geometrische Form ist.

11. Verfahren (100) nach einem der vorstehenden Ansprüche, **dadurch gekennzeichnet, dass** alle geometrischen Formen Ebenen sind.

12. Verfahren (100) nach einem der vorstehenden Ansprüche, **dadurch gekennzeichnet, dass** die Berechnung der geometrischen Transformation eine Berechnung einer Transformationsmatrix umfasst, die konstruiert wird aus:

   - einem Unterschied, mindestens in einer gegebenen Richtung, zwischen der Position mindestens einer geometrischen Form (h1,h2,v1,v2) in einem (202) der Bilder und der Position der mindestens einen geometrischen Form (h'1,h'2,v'1,v'2) in dem anderen (204) der Bilder; und
   - einem Orientierungsunterschied zwischen mindestens einem orthonormierten Bezugssystem, das mindestens einer geometrischen Form (v1,v2) in einem (202) der Bilder zugeordnet ist, und dem mindestens einen orthonormierten Bezugssystem, das der mindestens einen geometrischen Form (v'1,v'2) in dem anderen (204) der Bilder zugeordnet ist.

13. Verfahren (300) zum Überwachen eines Interessensbereichs in einer Szene, der in einem ersten Tiefenbild der Szene definiert ist, das zuvor gemäß einem ersten Sichtfeld aufgenommen wurde, das Verfahren (300) umfassend mindestens eine Iteration der folgenden Schritte:

   - Aufnehmen (306) eines zweiten Bildes gemäß einem zweiten Sichtfeld;
   - Registrieren (308) des ersten und des zweiten Tiefenbildes durch das Registrierungsverfahren (100) nach einem der vorstehenden Ansprüche;
   - Identifizieren (310) des Interessensbereichs in dem zweiten Tiefenbild; und
   - Erfassen (312) einer Änderung oder keiner Änderung in dem Interessensbereich.

14. Vorrichtung (400) zum Überwachen eines Interessensbereichs in einer realen Szene, umfassend:

   - mindestens eine 3D-Kamera (402), und
   - mindestens ein Rechenmittel (404);

   die zum Implementieren aller Verfahrensschritte (300) nach dem vorstehenden Anspruch konfiguriert sind.

15. Verfahren (600) zum Überwachen der Umgebung eines Roboters (500), umfassend:

   - eine Phase (602) zum Erhalten eines Tiefenbildes der Umgebung des Roboters (500), als Referenzbild bezeichnet, durch mindestens eine 3D-Kamera (520), die durch den Roboter (500) getragen wird; und
   - mindestens eine Iteration einer Erfassungsphase (620), umfassend die folgenden Schritte:

      - Aufnehmen (622), zu einem Messzeitpunkt, eines Tiefenbildes der Umgebung, als Messbild bezeichnet, durch die mindestens eine 3D-Kamera (520),

- Registrieren (628) des Referenz- und Messbildes durch das Verfahren nach einem der Ansprüche 1 bis 12, und
- Erfassen (630) einer Änderung bezüglich mindestens eines umgebenden Objekts, das sich in der Umgebung des Roboters (500) befindet, durch Vergleich des Referenz- und Messbildes.

16. Vorrichtung zum Überwachen der Umgebung eines Roboters, umfassend:

- mindestens eine 3D-Kamera (520), und
- mindestens ein Rechenmittel (524);

die zum Implementieren aller Verfahrensschritte (600) nach dem vorstehenden Anspruch konfiguriert sind.

17. Roboter (500), der mit einer Überwachungsvorrichtung nach dem vorstehenden Anspruch ausgestattet ist.

**Claims**

1. Method (100) for registering two depth images (202, 204) of a real scene, said method (100) comprising the following steps:

   - for each of said depth images:

     - detecting ($108_1$, $112_1$, $108_2$, $112_2$) a plurality of geometric shapes in said depth image (202, 204), and
     - determining ($110_1$, $110_2$, $114_1$, $114_2$) at least one geometric relationship between at least two geometric shapes of said plurality of geometric shapes;

   - identifying (116, 118) geometric shapes common to said two images (202, 204) by comparing the geometric relationships detected for one (202) of the images with those detected for the other (204) of the images;
   - calculating (120), on the basis of said common geometric shapes, a geometric transformation between said images (202, 204); and
   - registering (122) one (204) of said images relative to the other (202) of said images on the basis of said geometric transformation.

2. Method (100) according to the preceding claim, **characterized in that**, for each image (202, 204), the detection step ($108_1$, $112_1$, $108_2$, $112_2$) comprises detecting at least one group of geometric shapes all having a similar orientation relative to a predetermined reference direction in the scene.

3. Method (100) according to the preceding claim, **characterized in that**, for each image (202, 204), the detection step ($108_1$, $112_1$, $108_2$, $112_2$) comprises detecting:

   - a first group of geometric shapes all having a first orientation relative to the reference direction, in particular an orientation parallel to the reference direction; and
   - at least a second group of geometric shapes all having an identical second orientation relative to the reference direction that is different from the first orientation, in particular orthogonal to said first orientation.

4. Method (100) according to either one of claims 2 and 3, **characterized in that** the reference direction is the direction of the gravity vector in the scene, and the detection step ($108_1$, $108_2$) comprises detecting a group of geometric shapes (h1, h2, h'1, h'2) having a horizontal orientation in the scene.

5. Method (100) according to the preceding claim, **characterized in that** the geometric relationship between two horizontal geometric shapes (h1, h2, h'1, h'2) comprises a distance between the two shapes in the direction of the gravity vector.

6. Method (100) according to any one of claims 2 to 5, **characterized in that** the reference direction is the direction of the gravity vector in the scene, and the detection step ($112_1$, $112_2$) comprises detecting a group of geometric shapes (v1, v2, v'1, v'2) having a vertical orientation in the scene.

7. Method (100) according to the preceding claim, **characterized in that** the geometric relationship between two vertical geometric shapes (v1, v2, v'1, v'2) comprises at least one angle between the two geometric shapes.

8. Method (100) according to any one of claims 4 to 7, **characterized in that** the gravity vector is:

   - detected and reported by a sensor for each image; and/or
   - determined in each image (202, 204) by analyzing said image (202, 204).

9. Method (100) according to any one of the preceding claims, **characterized in that** the step ($110_1$, $110_2$, $114_1$, $114_2$) of determining geometric relationships comprises, for each geometric shape, respectively for each geometric shape of a group, determining a geometric relationship between said geometric shape and each of the other geometric shapes, respectively each of the other geometric shapes of said group, such that a geometric relationship is determined for each pairwise combination of the geometric shapes.

10. Method (100) according to any one of the preceding claims, **characterized in that** at least one geometric shape is a line, a plane or a three-dimensional geometric shape.

11. Method (100) according to any one of the preceding claims, **characterized in that** all the geometric shapes are planes.

12. Method (100) according to any one of the preceding claims, **characterized in that** calculating the geometric transformation comprises calculating a transformation matrix constructed from:

   - a difference, at least in a given direction, between the position of at least one geometric shape (h1, h2, v1, v2) in one (202) of said images and the position of said at least one geometric shape (h'1, h'2, v'1, v'2) in the other (204) of said images; and
   - a difference in orientation between at least one orthonormal reference frame associated with at least one geometric shape (v1, v2) in one (202) of said images and said at least one orthonormal reference frame associated with said at least one geometric shape (v'1, v'2) in the other (204) of said images.

13. Method (300) for monitoring a zone of interest in a scene, defined in a first depth image of said scene previously acquired in a first field of view, said method (300) comprising at least one iteration of the following steps:

   - acquiring (306) a second image in a second field of view;
   - registering (308) said first depth image and said second depth image using the registration method (100) according to any one of the preceding claims;
   - identifying (310) the zone of interest in said second depth image; and
   - detecting (312) a change or a lack thereof in said zone of interest.

14. Device (400) for monitoring a zone of interest in a real scene, comprising:

   - at least one 3D camera (402), and
   - at least one calculation means (404);

   which are configured to implement all the steps of the method (300) according to the preceding claim.

15. Method (600) for monitoring the environment of a robot (500), comprising:

   - a phase (602) of obtaining a depth image of the environment of said robot (500), referred to as the reference image, using at least one 3D camera (520) carried by said robot (500); and
   - at least one iteration of a detection phase (620) comprising the following steps:

      - acquiring (622), at a measurement time, a depth image of said environment, referred to as the measurement image, using said at least one 3D camera (520),
      - registering (628) said reference image and said measurement image using the method according to any one of claims 1 to 12, and
      - detecting (630) a change relative to at least one surrounding object located **in** the environment of said robot (500) by comparing said reference image and said measurement image.

16. Device for monitoring the environment of a robot, comprising:

   - at least one 3D camera (520), and
   - at least one calculation means (524);

   which are configured to implement all the steps of the method (600) according to the preceding claim.

17. Robot (500) equipped with a monitoring device according to the preceding claim.

**FIG. 1**

**FIG. 2**

EP 3 928 281 B1

| 302 | Acquisition d'une première image de profondeur |
| 304 | Définition d'une zone d'intérêt |
| 306 | Acquisition d'une deuxième image de profondeur |
| 308 | Recalage de la deuxième image de profondeur avec la première image de profondeur |
| 310 | Identification zone d'intérêt dans la deuxième image |
| 312 | Détection de changement |

300

## FIG. 3

404 — 402

400

## FIG. 4

**FIG. 5a**

**FIG. 5b**

## **FIG.6**

**600**

**602**

```
┌─────────────────────────────────────────┐
│  ┌───────────────────────────────────┐   │
│  │  Acquisition d'une image de        │   │── 606
│  │  profondeur individuelle par       │   │── 604
│  │  chaque caméra 3D                  │   │
│  ├───────────────────────────────────┤   │
│  │  Construction d'une image de       │   │── 608
│  │  profondeur composite à partir     │   │
│  │  des images individuelles          │   │
│  └───────────────────────────────────┘   │
│                  │                        │
│                  ▼                        │
│  ┌───────────────────────────────────┐   │
│  │  Construction de l'image de        │   │── 610
│  │  référence à partir des images     │   │
│  │  de profondeur séquentielles       │   │
│  └───────────────────────────────────┘   │
│                  │                        │
│                  ▼                        │
│  ┌───────────────────────────────────┐   │
│  │  Mémorisation de l'image de        │   │── 612
│  │  référence à partir des images     │   │
│  │  individuelles                     │   │
│  └───────────────────────────────────┘   │
└─────────────────────────────────────────┘
```

**620**

```
┌─────────────────────────────────────────┐
│  ┌───────────────────────────────────┐   │
│  │  Acquisition d'une image de        │   │── 624
│  │  profondeur individuelle par       │   │── 622
│  │  chaque caméra 3D                  │   │
│  ├───────────────────────────────────┤   │
│  │  Construction d'une image de       │   │── 626
│  │  mesure composite à partir des     │   │
│  │  images individuelles              │   │
│  └───────────────────────────────────┘   │
│                  │                        │
│                  ▼                        │
│  ┌───────────────────────────────────┐   │
│  │  Recalage de l'image de mesure     │   │── 628
│  │  avec l'image de référence         │   │
│  └───────────────────────────────────┘   │
│                  │                        │
│                  ▼                        │
│  ┌───────────────────────────────────┐   │
│  │  Comparaison de l'image de mesure  │   │── 630
│  │  avec l'image de référence         │   │
│  └───────────────────────────────────┘   │
│                  │                        │
│                  ▼                        │
│  ┌───────────────────────────────────┐   │
│  │         Différence ?              │   │
│  └───────────────────────────────────┘   │
│   NON       OUI        OUI                │
│              │          ▼                 │
│              │   ┌──────────────┐         │
│              │   │ Calcul       │         │── 632
│              │   │ distance     │         │
│              │   └──────────────┘         │
│              ▼          ▼                 │
│  ┌───────────────────────────────────┐   │
│  │     Déclenchement commande        │   │── 634
│  └───────────────────────────────────┘   │
└─────────────────────────────────────────┘
```

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2943851 A1

**Littérature non-brevet citée dans la description**

- **MARCELO SAVAL-CALVO**. $\mu$-MAR: Multiplane 3D Marker based Registration for depth-sensing cameras. *Expert Systems with Applications*, 2015, vol. 42 (23), ISSN 0957-4174, 9353-9365, https://doi.org/10.1016/j.eswa.2015.08.011